# FASCICULE DE BREVET EUROPEEN

(11) **EP 3 881 523 B1**
(45) Date de publication et mention de la délivrance du brevet: **27.09.2023**
(21) Numéro de dépôt: 19832654.8
(22) Date de dépôt: 19.12.2019
(51) Int. Cl.: H04L 61/5014

(54) **PROCÈDE ET SYSTÈME DE GESTION DE SERVEURS DHCP**
VERFAHREN UND SYSTEM ZUR VERWALTUNG VON DHCP-SERVERN
METHOD AND SYSTEM FOR MANAGING DHCP SERVERS

(30) Priorité: 20.12.2018 FR 1873530
(43) Date de publication de la demande: 22.09.2021
(73) Titulaire: SAGEMCOM BROADBAND SAS, 92500 Rueil-Malmaison (FR)
(72) Inventeur: COLLIAUX, Mathieu, 92500 RUEIL MALMAISON (FR)
(74) Mandataire: Cabinet Le Guen Maillet
(86) Numéro de dépôt international: PCT/EP2019/086231
(87) Numéro de publication internationale: WO 2020/127680

(56) Documents cités:
- US-A1- 2016 219 502
- BERNARD ABOBA MICROSOFT: "The Mini-DHCP Server; draft-aboba-dhc-mini-04.txt", THE MINI-DHCP SERVER; DRAFT-ABOBA-DHC-MINI-04.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 4, 29 septembre 2001 (2001-09-29), XP015009804,
- T'JOENS C HUBLET ALCATEL P DE SCHRIJVER MIND Y: "DHCP reconfigure extension; rfc3203.txt", DHCP RECONFIGURE EXTENSION; RFC3203.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 décembre 2001 (2001-12-01), XP015008982,
- Ralph Droms ET AL: "DHCP Failover Protocol <draft-ietf-dhc-failover-12.txt>", , 1 mars 2003 (2003-03-01), pages 1-133, XP055627466, Extrait de l'Internet: URL:https://tools.ietf.org/pdf/draft-ietf- dhc-failover-12.pdf [extrait le 2019-10-01]

## Description

### DOMAINE TECHNIQUE

La présente invention concerne un procédé et un système de gestion DHCP (« Dynamic Host Configuration Protocol » en anglais, tel que défini par le document normatif RFC 1531, modifié et complété par les documents normatifs RFC 1534, RFC 2131 et RFC 2132) destiné à éviter des conflits d'adresses IP (« Internet Protocol » en anglais, tel que défini par le document normatif RFC 791).

### ETAT DE LA TECHNIQUE ANTERIEURE

Un réseau local LAN (« Local Area Network » en anglais) basé sur une distribution dynamique d'adresses IP doit embarquer un serveur DHCP unique. Ce serveur DHCP unique peut en l'occurrence être un agent relais DHCP qui sert de mandataire (« proxy » en anglais) pour un autre serveur DHCP qui est localisé sur un autre réseau connecté audit réseau local LAN par le biais d'un routeur. Le serveur DHCP fournit à chaque dispositif demandeur du réseau local LAN des baux, chaque bail indiquant, au moins, une adresse IP qui doit être utilisée par l'équipement demandeur pour communiquer, ainsi qu'une durée de validité du bail. Le serveur DHCP peut également fournir des informations d'adresse IP de routeur et/ou d'adresse IP d'au moins un serveur DNS (« Domain Name System » en anglais, tel que défini dans le document normatif RFC 6895).

Dans les réseaux locaux LAN chez les abonnés d'un fournisseur d'accès à l'Internet, le serveur DHCP fait partie d'un ensemble de fonctionnalités intégrées aux passerelles GW (« gateway » en anglais) d'accès à l'Internet, et est donc visible par tout dispositif connecté au réseau local LAN.

En outre, dans les réseaux locaux LAN, des systèmes d'extension de couverture de communication sans-fil peuvent être utilisés afin d'augmenter la portée de ces réseaux locaux LAN en coordonnant plusieurs points d'accès AP (« Access Point » en anglais) répartis. Ces différents points d'accès AP sont intégrés à des noeuds interconnectés grâce à un sous-réseau d'acheminement (« backhaul subnetwork » en anglais) et mettent tous à disposition un même réseau local sans-fil WLAN (« Wireless Local Area Network » en anglais). Dans le cadre de la technologie Wi-Fi (marque déposée), tous ces points d'accès AP utilisent ainsi un même identifiant SSID (« Service Set IDentifier » en anglais) et un même mot de passe (aussi appelé *clef de sécurité*). Ainsi, l'extension de couverture de communication sans-fil est transparente pour les dispositifs connectés au réseau local sans-fil WLAN.

Le système d'extension de couverture de communication sans-fil est ainsi typiquement relié à l'Internet au travers de la passerelle GW, par exemple grâce à un cordon Ethernet assurant le raccordement d'un noeud principal du système d'extension de couverture de communication sans-fil avec la passerelle. Le système d'extension de couverture de communication sans-fil sert alors de relais entre la passerelle et chaque dispositif connecté de manière filaire ou sans-fil au réseau local LAN, et sert aussi de relais entre ces différents dispositifs connectés au réseau local LAN pour leur permettre de communiquer entre eux.

Les noeuds du sous-réseau d'acheminement sont connectés les uns aux autres, un noeud pouvant alors servir de relais entre deux autres noeuds du sous-réseau d'acheminement. Les noeuds sont ainsi interconnectés grâce à des liaisons filaires, par exemple de type Ethernet, ou à des liaisons sans-fil, par exemple une liaison Wi-Fi (marque déposée) utilisant un identifiant SSID différent dudit réseau local WLAN lui-même. Les noeuds du sous-réseau d'acheminement communiquent ainsi entre eux grâce à des liaisons logiques, par exemple des communications IP ou des tunnels chiffrés ou des communications selon un protocole de communication propriétaire. L'établissement de ces liaisons logiques s'effectue typiquement grâce à des messages de sonde (« probe » en anglais) et de découverte (« discovery » en anglais).

Les noeuds du sous-réseau d'acheminement sont typiquement coordonnés de manière centralisée, par un noeud maître parmi lesdits noeuds du sous-réseau d'acheminement. Le noeud maître peut être désigné par configuration figée ou dynamiquement par élection. Dans le cas des réseaux locaux LAN chez les abonnés d'un fournisseur d'accès à l'Internet, le noeud maître peut être le noeud du sous-réseau d'acheminement qui est directement connecté à la passerelle GW d'accès à l'Internet. Tous les noeuds du sous-réseau d'acheminement ont ainsi connaissance du noeud maître, et sont capables de l'identifier grâce à son adresse MAC (« Medium Access Control » en anglais).

Dans le cas où la liaison entre le système d'extension de couverture de communication sans-fil et la passerelle GW se rompt, il est souhaitable de maintenir la fonctionnalité d'échanges d'informations entre les dispositifs connectés au réseau local LAN, car ces échanges sont indépendants de l'accès à l'Internet lui-même. D'une manière générale, lorsque la liaison entre le serveur DHCP et le système d'extension de couverture de communication sans-fil se rompt, il est souhaitable que la fonctionnalité d'échanges d'informations entre les dispositifs connectés au réseau local LAN soit maintenue.

Toute communication au sein d'un réseau étant réglée au travers d'adresses IP attribuées au dispositifs connectés au réseau local LAN, il est souhaitable de fournir une solution qui permette de maintenir la fonction de serveur DHCP au sein du réseau local LAN en évitant les conflits d'adressage. Il est notamment souhaitable d'éviter ces conflits d'adressage lorsque la liaison avec le serveur DHCP est restaurée. Ces conflits d'adressage sont aussi à éviter lorsque ce serveur DHCP se trouve connecté ailleurs dans le réseau local LAN. Ces conflits d'adressage sont aussi à éviter lorsque ce serveur DHCP est remplacé par un autre serveur DHCP. Il est aussi souhaitable d'éviter ces conflits d'adressage lorsque plusieurs serveurs DHCP se retrouvent branchés au système d'extension de couverture de communication sans-fil. Il est aussi souhaitable de fournir une solution qui soit simple, efficace et à faible coût.

Il est notamment connu le document de brevet US 2014/0281029 A1 qui divulgue une solution permettant, dans un environnement contenant de multiples serveurs DHCP, de router les messages du protocole DCHP vers un serveur en particulier, mais cela nécessite une configuration spécifique des serveurs DHCP. Or, dans de nombreuses situations et notamment en ce qui concerne les serveurs DHCP intégrés aux passerelles d'accès à l'Internet actuelles, les serveurs DHCP n'offrent pas une telle flexibilité de configuration. D'ailleurs, de tels serveurs DHCP sont le plus souvent non-débrayables, ce qui amplifie grandement le manque de flexibilité offert et par conséquent les risques d'occurrence de situations de conflits d'adressage.

Il est aussi connu le document de brevet US 2014/0325040 A1, qui divulgue une solution permettant de dupliquer les informations d'un serveur DHCP principal vers un serveur DHCP de secours. Le serveur DHCP de secours peut ainsi prendre le relais en cas de déconnexion du DHCP principal en se servant des informations ainsi dupliquées. Ici encore, il est nécessaire de modifier le serveur DHCP principal pour qu'il permette cette duplication, ce qui n'est pas envisageable dans de nombreuses situations et notamment en ce qui concerne les serveurs DHCP intégrés aux passerelles d'accès à l'Internet actuelles.

Il est alors souhaitable de pallier ces inconvénients de l'état de la technique. Le document "The Mini-DHCP Server", draft -aboda-dhc-mini-04 publié le 29 Septembre 2001 divulgue un serveur DHCP de secours. Le document "DHCP reconfigure extension", RFC 3203 publié en Decembre 2001 divulgue le message DHCP FORCERENEW.

### EXPOSE DE L'INVENTION

L'objet de l'invention est défini par les revendications indépendantes.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un système de communication dans lequel la présente invention peut être implémentée ;
[Fig. 2] illustre schématiquement un noeud maître dans un sous-réseau d'acheminement du système de communication de la Fig. 1 ;
[Fig. 3] illustre schématiquement un exemple d'agencement matériel de noeuds du sous-réseau d'acheminement ;
[Fig. 4] illustre schématiquement un algorithme d'activation d'un serveur DHCP de secours dans le noeud maître ;
[Fig. 5] illustre schématiquement le système de communication lors d'un re-branchement d'un serveur DHCP principal ;
[Fig. 6] illustre schématiquement une configuration de noeud du sous-réseau d'acheminement lorsque le serveur DHCP de secours est activé ;
[Fig. 7] illustre schématiquement un algorithme de désactivation du serveur DHCP de secours, dans un mode de réalisation particulier ;
[Fig. 8] illustre schématiquement le système de communication lors d'un branchement d'un serveur DHCP conflictuel ; et
[Fig. 9] illustre schématiquement un algorithme de désactivation du serveur DHCP de secours, dans un autre mode de réalisation particulier.

### EXPOSE DETAILLE DE MODES DE REALISATION

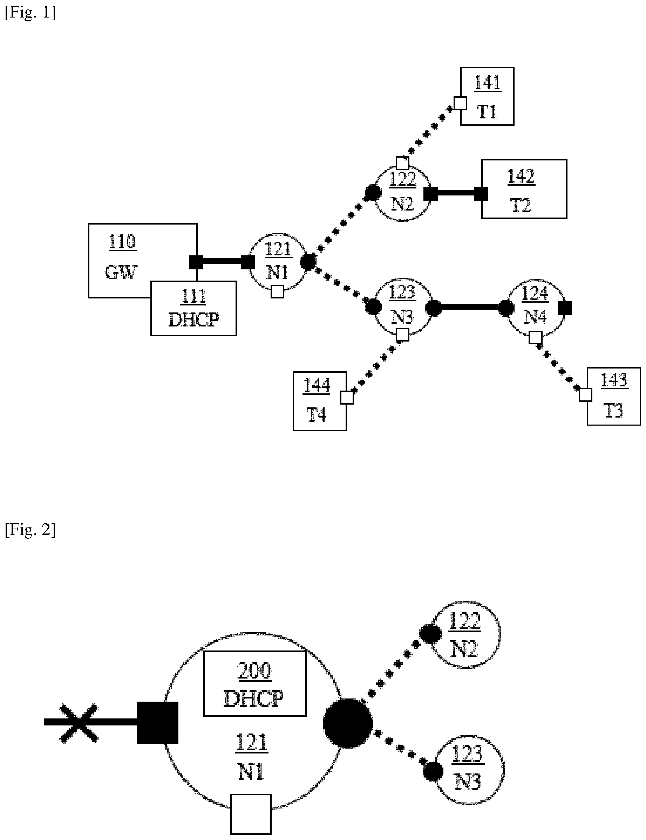

La **Fig. 1** illustre schématiquement un système de communication dans lequel la présente invention peut être implémentée. Le système de communication comporte un système d'extension de couverture de communication sans-fil construit autour d'un sous-réseau d'acheminement comportant un ensemble de noeuds N1 121, N2 122, N3 123, N4 124 interconnectés. Chaque noeud d'une pluralité de noeuds du sous-réseau d'acheminement, typiquement tous les noeuds du sous-réseau d'acheminement, implémente une fonctionnalité de point d'accès AP d'un réseau local sans-fil WLAN (« Wireless Local Area Network » en anglais). Les noeuds de ladite pluralité de noeuds mettent tous à disposition un même réseau local sans-fil WLAN (même nom...). Dans le cadre de la technologie Wi-Fi (marque déposée), tous ces points d'accès AP utilise ainsi un même identifiant SSID et un même mot de passe. La zone de couverture du réseau local sans-fil WLAN, et donc manière générale du réseau local LAN ainsi constitué autour du système d'extension de couverture de communication sans-fil, est alors étendue de manière transparente pour chaque terminal, ou station, qui s'y connecte.

Les noeuds N1 121, N2 122, N3 123, N4 124 du sous-réseau d'acheminement sont connectés les uns aux autres (e.g., grâce à une structure en forme d'arbre ou à une structure maillée), un noeud pouvant alors servir de relais entre deux autres noeuds du sous-réseau d'acheminement. Les noeuds N1 121, N2 122, N3 123, N4 124 sont ainsi interconnectés grâce à des liaisons filaires, par exemple de type Ethernet, ou à des liaisons sans-fil, par exemple une liaison Wi-Fi (marque déposée) utilisant un identifiant SSID différent dudit réseau local WLAN lui-même. Les noeuds N1 121, N2 122, N3 123, N4 124 du sous-réseau d'acheminement communiquent ainsi entre eux grâce à des liaisons logiques, par exemple des communications IP ou des tunnels chiffrés ou des communications selon un protocole de communication propriétaire.

De manière illustrative, la Fig. 1 montre que le noeud N1 121 est connecté au noeud N2 122 et au noeud N3 123 grâce à une liaison sans-fil, et le noeud N4 124 est connecté au noeud N3 123 grâce à une liaison filaire.

Le système d'extension de couverture de communication sans-fil permet ainsi d'interconnecter une passerelle GW 110 d'accès à l'Internet, un terminal T1 141, un terminal T2 142, un terminal T3 143 et un terminal T4 144. La passerelle GW 110 implémente une fonctionnalité de serveur DHCP 111, appelé ici serveur DHCP principal. Le terminal T1 141 est par exemple un téléphone intelligent (« smartphone » en anglais) connecté par une liaison sans-fil au noeud N2 122, c'est-à-dire que le terminal T1 141 est ainsi connecté via le réseau local sans-fil WLAN grâce au noeud N2 122 agissant comme point d'accès AP. Le terminal T2 142 est par exemple un téléviseur connecté par une liaison filaire au noeud N2 122. Le terminal T3 143 est par exemple une tablette connectée par une liaison sans-fil au noeud N4 124, c'est-à-dire que le terminal T3 143 est ainsi connecté via le réseau local sans-fil WLAN grâce au noeud N4 124 agissant comme point d'accès AP. Le terminal T4 144 est par exemple une unité de stockage en réseau NAS (« Network Attached Storage » en anglais) connecté par une liaison sans-fil au noeud N3 123, c'est-à-dire que le terminal T4 144 est ainsi connecté via le réseau local sans-fil WLAN grâce au noeud N3 123 agissant comme point d'accès AP.

Les noeuds du sous-réseau d'acheminement sont coordonnés de manière centralisée, par un noeud maître parmi lesdits noeuds du sous-réseau d'acheminement. Le noeud maître peut être désigné par configuration figée ou dynamiquement par élection. Le noeud maître est par exemple le noeud du sous-réseau d'acheminement qui est directement connecté à la passerelle GW d'accès à l'Internet, à savoir le noeud N1 121 dans le contexte de la Fig. 1. Tous les noeuds du sous-réseau d'acheminement ont ainsi connaissance du noeud maître, et sont capables de l'identifier grâce à son adresse MAC.

Dans le cadre de la présente invention, comme illustré schématiquement sur la Fig. 2, le noeud maître N1 121 implémente une fonctionnalité débrayable de serveur DHCP de secours 200 afin de gérer les baux d'adresses IP en cas de déconnexion du serveur DHCP principal. Comme décrit ci-après, le serveur DHCP de secours est ainsi sélectivement activé lorsque le serveur DHCP principal est déconnecté du système d'extension de couverture de communication sans-fil.

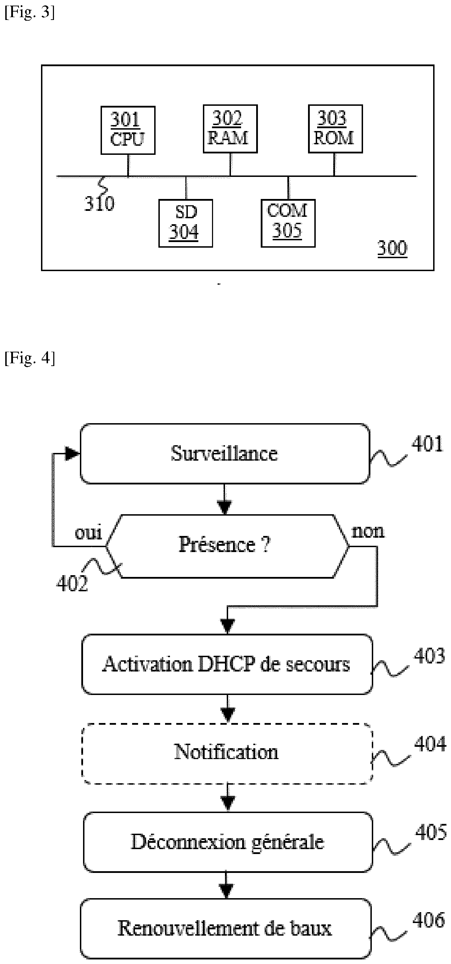

La **Fig. 3** illustre schématiquement un exemple d'architecture matérielle de tout noeud 300 du sous-réseau d'acheminement.

L'exemple d'architecture matérielle présenté comporte, reliés par un bus de communication 310 : un processeur CPU (« Central Processing Unit » en anglais) 301 ; une mémoire vive RAM (« Random Access Memory » en anglais) 302 ; une mémoire morte ROM (« Read Only Memory » en anglais) 303 ou une mémoire Flash ; une unité de stockage ou un lecteur de support de stockage, tel qu'un lecteur de cartes SD (« Secure Digital » en anglais) 304 ou un disque dur HDD (« Hard Disk Drive » en anglais) ; et au moins un ensemble d'interfaces de communication COM 305. L'ensemble d'interfaces de communication COM 305 permet d'implémenter la fonctionnalité de point d'accès AP pour étendre la couverture du réseau local sans-fil WLAN, de connecter des terminaux ou la passerelle GW 110 de manière filaire et de mettre en place le sous-réseau d'acheminement.

Le processeur CPU 301 est capable d'exécuter des instructions chargées dans la mémoire RAM 302 à partir de la mémoire ROM 303, d'une mémoire externe (telle qu'une carte SD), d'un support de stockage (tel que le disque dur HDD), ou d'un réseau de communication. Lors de la mise sous tension, le processeur CPU 301 est capable de lire de la mémoire RAM 302 des instructions et de les exécuter. Ces instructions forment un programme d'ordinateur causant la mise en oeuvre, par le processeur CPU 301, de tout ou partie des algorithmes et étapes décrits ci-après.

Ainsi, tout ou partie des algorithmes et étapes décrits ci-après peut être implémenté sous forme logicielle par exécution d'un ensemble d'instructions par une machine programmable, telle qu'un DSP (« Digital Signal Processor » en anglais) ou un microcontrôleur ou un processeur. Tout ou partie des algorithmes et étapes décrits ci-après peut aussi être implémenté sous forme matérielle par une machine ou un composant dédié, tel qu'un FPGA (« Field-Programmable Gate Array » en anglais) ou un ASIC (« Application-Specific Integrated Circuit » en anglais). Ainsi, les noeuds N1 121, N2 122, N3 123, N4 124 comportent de la circuiterie électronique adaptée et configurée pour implémenter les algorithmes et étapes décrits ci-après.

La **Fig. 4** illustre schématiquement un algorithme d'activation du serveur DHCP de secours 200 dans le noeud maître.

Dans une étape 401, le noeud auquel est connecté le serveur DHCP principal 111, c'est-à-dire le noeud N1 121 sur la Fig. 1, surveille si le serveur DHCP principal 111 est toujours, ou pas, connecté au système d'extension de couverture de communication sans-fil. Le serveur DHCP principal 111 peut être présent dans un dispositif connecté de manière filaire, ou de manière sans-fil via le réseau local sans-fil WLAN, au système d'extension de couverture de communication sans-fil. Lorsque le serveur DHCP principal 111 est intégré à la passerelle GW 110, le noeud N1 121 peut simplement surveiller si la passerelle GW 110 est toujours, ou pas, connectée au système d'extension de couverture de communication sans-fil. Par exemple, lorsque le noeud N1 121 repose sur un système d'exploitation Linux, les évènements NETLINK peuvent être utilisés pour effectuer cette surveillance, en particulier l'évènement RTMGRP_LINK qui prend l'état UP ou DOWN selon l'état physique de la liaison considérée. Chacun des changements d'état de la liaison physique génère instantanément un évènement NETLINK correspondant, ce qui permet au noeud N1 121 de détecter que la passerelle GW 110 a été débranchée.

Dans une étape 402, le noeud N1 121 vérifie si le serveur DHCP principal 111 est toujours connecté au système d'extension de couverture de communication sans-fil. Si tel est le cas, l'étape 401 est répétée ; sinon, une étape 403 est effectuée.

Dans l'étape 403, le noeud N1 121 active le serveur DHCP de secours 200. Si la surveillance de l'étape 401 est effectuée par un autre noeud que le noeud maître, (i.e., par un autre noeud que celui qui implémente le serveur DHCP de secours 200), alors cet autre noeud informe le noeud maître que le serveur DHCP principal 111 a été débranché afin que le noeud maître puisse activer le serveur DHCP de secours 200 en réponse au débranchement du serveur DHCP principal 111. En effet, le noeud maître (i.e., qui implémente le serveur DHCP de secours 200) est préférentiellement le noeud du système d'extension de couverture de communication sans-fil qui est connecté serveur DHCP principal 111, mais peut aussi en variante être un autre noeud du système d'extension de couverture de communication sans-fil.

Dans une étape 404 le noeud maître notifie les autres noeuds du système d'extension de couverture de communication sans-fil que le serveur DHCP de secours 200 a été activé. Tous les noeuds notent alors que le serveur DHCP de secours 200 a été activé (entrée en mode opérationnel de secours).

Dans une étape 405, le noeud maître instruit les autres noeuds du système d'extension de couverture de communication sans-fil d'effectuer une déconnexion générale du réseau local LAN. A noter que les étapes 404 et 405 sont effectuées en une seule et même étape dans laquelle le noeud maître envoie un message de requête de déconnexion générale du réseau local LAN qui inclut une information complémentaire indiquant que le serveur DHCP de secours 200 a été activé (entrée en mode opérationnel de secours).

Pour exécuter la déconnexion générale, chacun des noeuds du système d'extension de couverture de communication sans-fil :
- résilie son propre bail d'adresse IP ;
- redémarre toute interface de communication qui n'est pas utilisée pour créer le sous-réseau d'acheminement, à savoir redémarrer toute interface de communication sans-fil qui n'est pas utilisée pour créer le sous-réseau d'acheminement (i.e., redémarre toute interface de communication sans-fil liée au réseau local sans-fil WLAN), ce qui implique la résiliation de tous les baux des dispositifs connectés à cet instant au réseau local sans-fil WLAN, et redémarrer toute interface de communication filaire qui n'est pas utilisée pour créer le sous-réseau d'acheminement, ce qui implique la résiliation de tous les baux des dispositifs connectés de manière filaire au système d'extension de couverture de communication sans-fil.

Le redémarrage de ces interfaces force les dispositifs qui leur étaient connectés à se reconnecter et à demander un renouvellement de bail afin d'obtenir une adresse IP en conformité avec la politique d'attribution d'adresses IP par le serveur DHCP en place (en l'occurrence, à cet instant, le serveur DHCP de secours 200).

Ainsi, dans une étape 406, le noeud maître, plus particulièrement le serveur DHCP de secours 200, effectue des renouvellements de baux pour l'ensemble des dispositifs connectés au réseau LAN (y compris les noeuds du système d'extension de couverture de communication sans-fil). Le serveur DHCP de secours 200 traite, pour ce faire, les requêtes DHCP qui proviennent des différents dispositifs du réseau local LAN, y compris celles émanant des noeuds du système d'extension de couverture de communication sans-fil. Un renouvellement complet des adresses IP du réseau local LAN est donc effectué, ce qui évite tout conflit d'adresse IP avec la politique d'attribution d'adresses IP précédemment mise en place par le serveur DHCP principal 111.

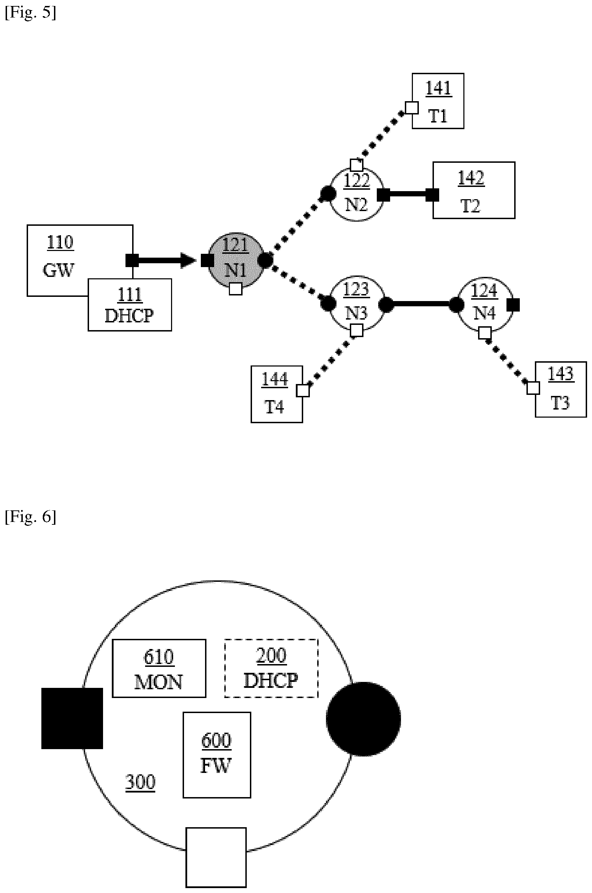

La **Fig. 5** illustre schématiquement le système de communication lors d'un re-branchement d'un serveur DHCP principal 111. Sur la Fig. 5, la passerelle GW 110 qui intègre le serveur DHCP principal 111 est rebranchée sur le noeud N1 121. La passerelle GW 110 peut en variante être rebranchée sur un autre noeud du système d'extension de couverture de communication sans-fil. Dans une autre variante, un autre dispositif que la passerelle GW 110 est branché au système d'extension de couverture de communication sans-fil, cet autre dispositif intégrant un serveur DHCP qui n'est pas non plus débrayable (comme c'est le cas du serveur DHCP 111 de la passerelle GW 110).

Pour permettre de détecter le branchement d'un tel serveur DHCP alors que le système d'extension de couverture de communication sans-fil est en mode opérationnel de secours, chaque noeud implémente un mécanisme de surveillance MON 610 et un pare-feu FW 600, comme illustré sur la Fig. 6. Le mécanisme de surveillance MON 610 surveille, sur toute interface de communication qui n'est pas utilisée pour créer le sous-réseau d'acheminement, toute apparition de nouveau dispositif. En cas d'apparition de nouveau dispositif, des mesures de protection sont prises grâce une configuration particulière du pare-feu 600, afin de créer une barrière logique évitant les conflits d'adresse IP. Cet aspect est détaillé ci-après.

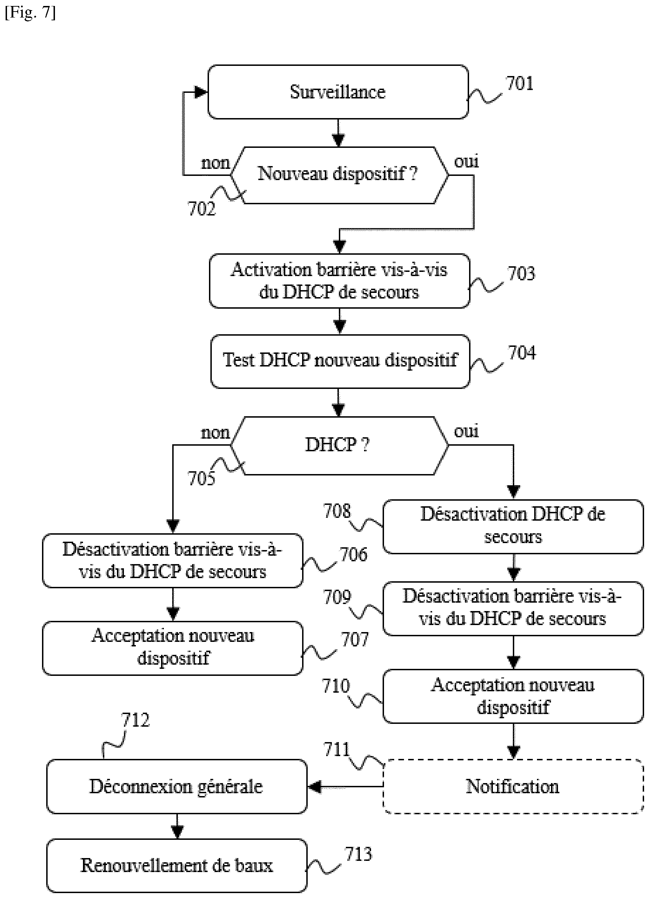

La **Fig. 7** illustre schématiquement un algorithme de désactivation du serveur DHCP de secours 200, dans un mode de réalisation particulier.

Dans une étape 701, chaque noeud du système d'extension de couverture de communication sans-fil surveille si un nouveau dispositif lui est connecté, que ce soit par le biais d'une liaison sans-fil ou par le biais d'une liaison filaire. Par exemple, comme déjà indiqué, lorsque les noeuds reposent sur un système d'exploitation Linux, les évènements NETLINK peuvent être utilisés pour effectuer cette surveillance.

Dans une étape 702, chaque noeud vérifie si un nouveau dispositif lui est connecté. Si tel est le cas, une étape 703 est effectuée ; sinon, l'étape 701 est répétée.

Dans l'étape 703, le noeud qui a détecté le branchement d'un nouveau dispositif à une de ses interfaces qui n'est pas utilisée pour créer le sous-réseau d'acheminement active une barrière logique vis-à-vis du serveur DHCP de secours 200. La barrière logique isole le mécanisme de surveillance MON 610 du noeud en question vis-à-vis du serveur DHCP de secours 200, pour permettre de sonder l'éventuelle présence d'un serveur DHCP dans le dispositif nouvellement connecté sans que le mécanisme de surveillance MON 610 ne subisse d'interférence de la part du serveur DHCP de secours 200.

Dans un mode de réalisation particulier, la barrière logique rejette toute réponse « DHCP Offer », transmise via le protocole UDP (« User Datagram Protocol » en anglais, tel que défini dans le document normatif RFC 768), en provenance du sous-réseau d'acheminement et à destination du noeud qui a activé ladite barrière logique. Par conséquent, le mécanisme de surveillance MON 610 ne subit pas d'interférence de la part du serveur DHCP de secours 200. Par exemple, le pare-feu FW 600 est configuré pour effectuer un droppage de toute réponse « DHCP Offer » en provenance du sous-réseau d'acheminement et à destination du noeud qui a activé ladite barrière logique (clause INPUT du pare-feu FW 600).

Dans un mode de réalisation particulier, la barrière logique isole en outre le dispositif nouvellement connecté vis-à-vis du serveur DHCP de secours 200, pour permettre au mécanisme de surveillance MON 610 de sonder l'éventuelle présence d'un serveur DHCP dans le dispositif nouvellement connecté sans que le dispositif nouvellement connecté ne subisse d'interférence de la part du serveur DHCP de secours 200. Ainsi, dans un mode de réalisation particulier, la barrière logique rejette toute réponse « DHCP Offer » en provenance du sous-réseau d'acheminement et traversant le noeud qui a activé ladite barrière logique. Par exemple, le pare-feu FW 600 est configuré pour effectuer un droppage de toute réponse « DHCP Offer » en provenance du sous-réseau d'acheminement et traversant le noeud qui a activé ladite barrière logique (clause THROUGH du pare-feu).

Bien d'autres méthodes peuvent être utilisées pour créer une barrière logique qui isole le mécanisme de surveillance MON 610, et éventuellement le dispositif nouvellement connecté, vis-à-vis du serveur DHCP de secours 200.

Dans une étape 704, le mécanisme de surveillance MON 610 du noeud qui a détecté le branchement du nouveau dispositif effectue un test DHCP auprès dudit nouveau dispositif. En d'autres termes, le mécanisme de surveillance MON 610 sonde le nouveau dispositif pour déterminer si ledit nouveau dispositif embarque un serveur DHCP. Dans un mode de réalisation particulier, le mécanisme de surveillance MON 610 diffuse (« broadcast » en anglais) une requête de découverte DHCP, à savoir une requête « DHCP Discovery ». Cette requête est ainsi reçue par l'ensemble des dispositifs raccordés au réseau local LAN, y compris le noeud maître et donc le serveur DHCP de secours 200. Chaque serveur DHCP présent dans le réseau local LAN transmet alors, en mode point-à-point (« unicast » en anglais) à destination du noeud qui a détecté le branchement du nouveau dispositif, une réponse d'offre DHCP, à savoir une réponse « DHCP Offer » en retour. La réponse du serveur DHCP de secours 200 est alors bloquée par la barrière logique activée à l'étape 703. Si le dispositif nouvellement connecté embarque un serveur DHCP, le mécanisme de surveillance MON 610 reçoit alors la réponse « DHCP Offer » en provenance de ce serveur DHCP embarqué. Sinon, sans réponse après expiration d'une temporisation de durée prédéfinie, le mécanisme de surveillance MON 610 considère que le dispositif nouvellement connecté n'embarque pas de serveur DHCP.

Dans une étape 705, le mécanisme de surveillance MON 610 vérifie si le test effectué à l'étape 704 conclut que le dispositif nouvellement connecté embarque un serveur DHCP. Si tel est le cas, le serveur DHCP de secours 200 doit céder la place au serveur DHCP ainsi introduit (ou réintroduit) dans le réseau local LAN, et une étape 708 est effectuée ; sinon, une étape 706 est effectuée.

Dans l'étape 706, le noeud qui a détecté le branchement du nouveau dispositif à une de ses interfaces qui n'est pas utilisée pour créer le sous-réseau d'acheminement désactive la barrière logique qui avait été mise en place à l'étape 703.

Dans une étape 707, le noeud accepte le nouveau dispositif dans le réseau local LAN, et il est mis fin à l'algorithme de la Fig. 7.

Dans l'étape 708, si le noeud qui a détecté le branchement du nouveau dispositif à une de ses interfaces qui n'est pas utilisée pour créer le sous-réseau d'acheminement est le noeud maître, le noeud maître désactive le serveur DHCP de secours 200. Sinon, le noeud en question informe le noeud maître qu'un serveur DHCP, à considérer désormais comme le serveur DHCP principal, a été branché ; alors le maître désactive le serveur DHCP de secours 200.

Dans une étape 709, le noeud qui a détecté le branchement du nouveau dispositif à une de ses interfaces qui n'est pas utilisée pour créer le sous-réseau d'acheminement désactive la barrière logique qui avait été mise en place à l'étape 703.

Dans une étape 710, le noeud en question accepte le nouveau dispositif dans le réseau local LAN.

Dans une étape 711 optionnelle, le noeud maître notifie les autres noeuds du système d'extension de couverture de communication sans-fil que le serveur DHCP de secours 200 a été désactivé. Tous les noeuds notent alors que le serveur DHCP de secours 200 a été désactivé (retour en mode opérationnel normal). Le fait pour chaque noeud de savoir dans quel mode opérationnel se trouve le système d'extension de couverture de communication sans-fil permet d'activer le mécanisme de surveillance MON 610 uniquement en mode opérationnel de secours.

Dans une étape 712, le noeud maître instruit les autres noeuds du système d'extension de couverture de communication sans-fil d'effectuer une déconnexion générale du réseau local LAN. A noter que les étapes 711 et 712 peuvent être effectuées en une seule et même étape dans laquelle le noeud maître envoie un message de requête de déconnexion générale du réseau local LAN qui inclut une information complémentaire indiquant que le serveur DHCP de secours 200 a été désactivé (retour en mode opérationnel normal). Pour exécuter la déconnexion générale, chacun des noeuds du système d'extension de couverture de communication sans-fil procède comme déjà décrit en relation avec la Fig. 4.

Ainsi, dans une étape 713, le serveur DHCP principal effectue des renouvellements de baux pour l'ensemble des dispositifs connectés au réseau LAN (y compris les noeuds du système d'extension de couverture de communication sans-fil). Le serveur DHCP principal traite, pour ce faire, les requêtes DHCP qui proviennent des différents dispositifs du réseau local LAN, y compris celles émanant des noeuds du système d'extension de couverture de communication sans-fil. Un renouvellement complet des adresses IP du réseau local LAN est donc effectué, ce qui évite tout conflit d'adresse IP avec la politique d'attribution d'adresses IP précédemment mise en place par le serveur DHCP de secours 200.

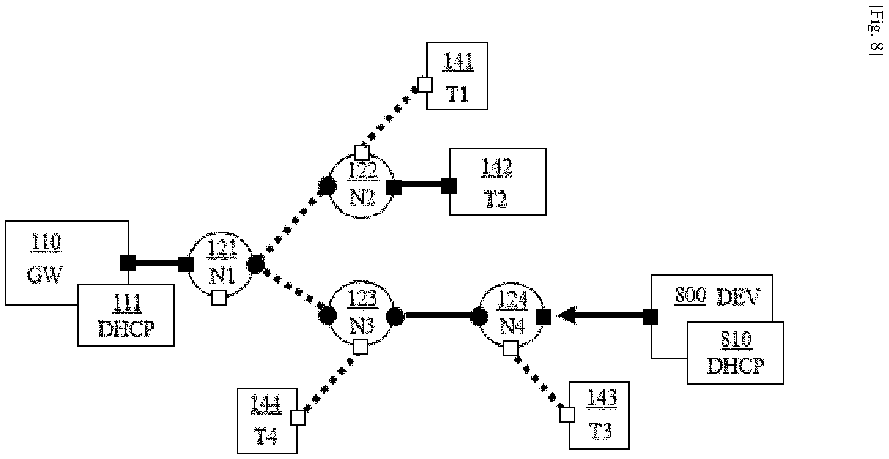

Dans un mode de réalisation particulier, le système d'extension de couverture de communication sans-fil est apte à gérer des conflits de serveurs DHCP non-débrayables qui lui seraient raccordés. La Fig. 8 illustre schématiquement le système de communication lors d'un branchement d'un serveur DHCP conflictuel 810 alors que le serveur DHCP principal 111 est déjà actif. Le serveur DHCP conflictuel 810 est embarqué dans un dispositif DEV 800 qui est branché sur le noeud N4 124. Le branchement du dispositif DEV 800 peut se faire par liaison filaire ou sans-fil.

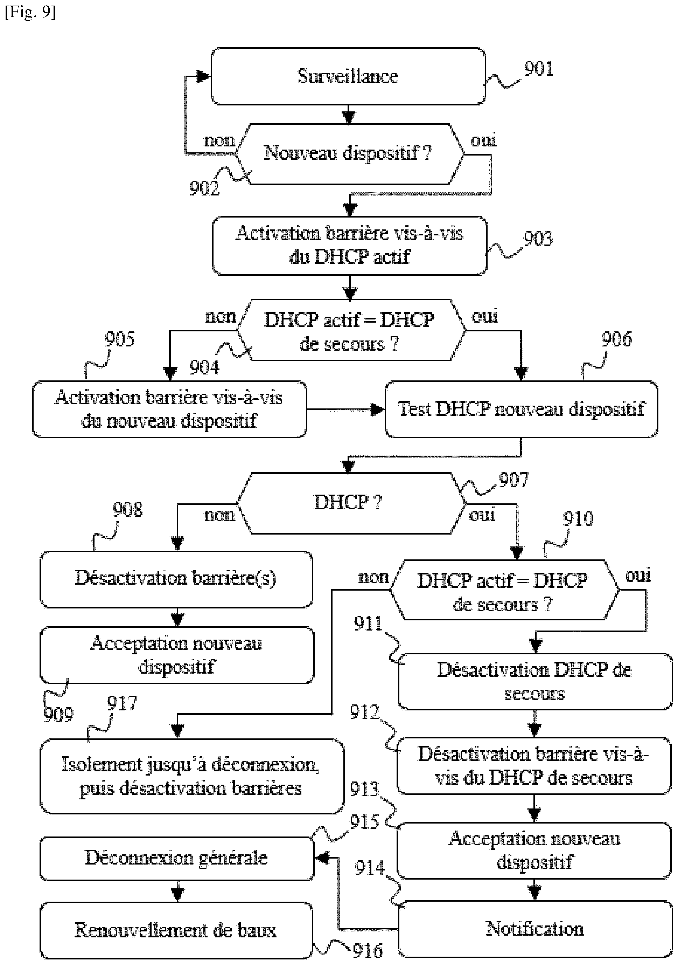

La **Fig. 9** illustre schématiquement un algorithme de désactivation du serveur DHCP de secours 200, dans un mode de réalisation particulier en rapport avec la Fig. 8. A noter que dans ce cadre, lors de l'éventuelle activation du serveur DHCP de secours 200, l'étape 404 n'est pas optionnelle. Chaque noeud du système d'extension de couverture de communication sans-fil doit savoir quel mode opérationnel est en cours.

Dans une étape 901, chaque noeud du système d'extension de couverture de communication sans-fil surveille si un nouveau dispositif lui est connecté, que ce soit par le biais d'une liaison sans-fil ou par le biais d'une liaison filaire. Par exemple, comme déjà indiqué, lorsque les noeuds reposent sur un système d'exploitation Linux, les évènements NETLINK peuvent être utilisés pour effectuer cette surveillance.

Dans une étape 902, chaque noeud vérifie si un nouveau dispositif lui est connecté. Si tel est le cas, une étape 903 est effectuée ; sinon, l'étape 901 est répétée.

Dans l'étape 903, le noeud qui a détecté le branchement d'un nouveau dispositif à une de ses interfaces qui n'est pas utilisée pour créer le sous-réseau d'acheminement active une barrière logique vis-à-vis du serveur DHCP actif, que ce soit le serveur DHCP de secours 200 ou le serveur DHCP principal 111. La barrière logique en question correspond à celle de l'étape 703 déjà décrite.

Dans l'étape 904, le noeud en question détermine si le serveur DHCP actif est le serveur DHCP principal 111 ou le serveur DHCP de secours 200. En d'autres termes, le noeud en question détermine si le système d'extension de couverture de communication sans-fil est en mode opérationnel normal ou en mode opérationnel de secours. En mode opérationnel normal, une étape 905 est effectuée ; en mode opérationnel de secours, une étape 906 est effectuée.

Dans l'étape 905, le noeud en question active une barrière logique complémentaire pour interdire à tout message DHCP qui pourrait être émis par le dispositif nouvellement connecté d'emprunter le sous-réseau d'acheminement. En d'autres termes, la barrière logique complémentaire isole le sous-réseau d'acheminement vis-à-vis du dispositif nouvellement connecté, de sorte que seul le mécanisme de surveillance MON 610 puisse recevoir d'éventuels messages DHCP en provenance dudit dispositif nouvellement connecté. Par exemple, le pare-feu FW 600 est configuré pour effectuer un droppage de tout message DHCP en provenance du dispositif nouvellement connecté et destiné à être propager via le sous-réseau d'acheminement (clause THROUGH du pare-feu FW 600). Puis, l'étape906 est effectuée.

Dans une étape 906, le mécanisme de surveillance MON 610 du noeud qui a détecté le branchement du nouveau dispositif effectue un test DHCP auprès dudit nouveau dispositif. En d'autres termes, le mécanisme de surveillance MON 610 sonde le nouveau dispositif pour déterminer si ledit nouveau dispositif embarque un serveur DHCP, comme déjà décrit en relation avec l'étape 704.

Dans une étape 907, le mécanisme de surveillance MON 610 vérifie si le test effectué à l'étape 906 conclut que le dispositif nouvellement connecté embarque un serveur DHCP. Si tel est le cas, une étape 910 est effectuée ; sinon, une étape 908 est effectuée.

Dans l'étape 908, le noeud en question désactive la barrière logique qui a été mise en place à l'étape 903, ainsi que la barrière logique complémentaire qui a éventuellement été mise en place à l'étape 905.

Dans une étape 909, le noeud en question accepte le nouveau dispositif dans le réseau local LAN, et il est mis fin à l'algorithme de la Fig. 9.

Dans l'étape 910, le noeud en question détermine si le serveur DHCP actif est le serveur DHCP principal 111 ou le serveur DHCP de secours 200, comme à l'étape 904. En mode opérationnel normal, une étape 911 est effectuée ; en mode opérationnel de secours, une étape 912 est effectuée.

Dans l'étape 911, le noeud en question maintient à l'isolement le serveur DHCP du dispositif nouvellement connecté pour éviter les conflits d'adresses IP avec le serveur DHCP principal 111, et ce, jusqu' à déconnexion du dispositif nouvellement connecté. Ensuite, le noeud en question désactive la barrière logique qui a été mise en place à l'étape 903, ainsi que la barrière logique complémentaire qui a été mise en place à l'étape 905 ; puis il est mis fin à l'algorithme de la Fig. 9.

Dans l'étape 912, le serveur DHCP de secours 200 doit céder la place au serveur DHCP ainsi introduit (ou réintroduit) dans le réseau local LAN, qui devient alors le serveur DHCP principal. En conséquence, si le noeud qui a détecté le branchement du nouveau dispositif à une de ses interfaces qui n'est pas utilisée pour créer le sous-réseau d'acheminement est le noeud maître, le noeud maître désactive le serveur DHCP de secours 200. Sinon, le noeud en question informe le noeud maître qu'un serveur DHCP, à considérer désormais comme le serveur DHCP principal, a été branché ; alors le maître désactive le serveur DHCP de secours 200.

Dans une étape 913, le noeud qui a détecté le branchement du nouveau dispositif à une de ses interfaces qui n'est pas utilisée pour créer le sous-réseau d'acheminement désactive la barrière logique qui avait été mise en place à l'étape 903.

Dans une étape 914, le noeud en question accepte le nouveau dispositif dans le réseau local LAN.

Dans une étape 915, le noeud maître notifie les autres noeuds du système d'extension de couverture de communication sans-fil que le serveur DHCP de secours 200 a été désactivé. Tous les noeuds notent alors que le serveur DHCP de secours 200 a été désactivé (retour en mode opérationnel normal). Le fait pour chaque noeud de savoir dans quel mode opérationnel se trouve le système d'extension de couverture de communication sans-fil permet de déterminer s'il est nécessaire, ou pas, d'activer la barrière logique complémentaire et, en cas d'introduction d'un nouveau dispositif embarquant un serveur DHCP, de déterminer si celui-ci doit être maintenu à l'isolement ou prendre le rôle de serveur DHCP principal. A noter que dans le mode de réalisation des Figs. 8 et 9, le mécanisme de surveillance MON 610 est actif en permanence.

Dans une étape 916, le noeud maître instruit les autres noeuds du système d'extension de couverture de communication sans-fil d'effectuer une déconnexion générale du réseau local LAN. A noter que les étapes 915 et 916 peuvent être effectuées en une seule et même étape dans laquelle le noeud maître envoie un message de requête de déconnexion générale du réseau local LAN qui inclut une information complémentaire indiquant que le serveur DHCP de secours 200 a été désactivé (retour en mode opérationnel normal). Pour exécuter la déconnexion générale, chacun des noeuds du système d'extension de couverture de communication sans-fil procède comme déjà décrit en relation avec la Fig. 4.

Ainsi, dans une étape 917, le serveur DHCP principal effectue des renouvellements de baux pour l'ensemble des dispositifs connectés au réseau LAN (y compris les noeuds du système d'extension de couverture de communication sans-fil). Le serveur DHCP principal traite, pour ce faire, les requêtes DHCP qui proviennent des différents dispositifs du réseau local LAN, y compris celles émanant des noeuds du système d'extension de couverture de communication sans-fil. Un renouvellement complet des adresses IP du réseau local LAN est donc effectué, ce qui évite tout conflit d'adresse IP avec la politique d'attribution d'adresses IP précédemment mise en place par le serveur DHCP de secours 200.

## Revendications

1. Procédé de gestion de baux d'adresses IP dans un système d'extension de couverture de communication sans-fil comportant un sous-réseau d'acheminement comportant un ensemble de noeuds interconnectés (121, 122, 123, 124), une pluralité de noeuds du sous-réseau d'acheminement (121, 122, 123, 124) implémentant une fonctionnalité de point d'accès d'un même réseau de communication sans-fil, le système d'extension de couverture de communication sans-fil étant adapté pour permettre de connecter des dispositifs (110, 141, 142, 143, 144) auxdits noeuds (121, 122, 123, 124) par le biais du réseau de communication sans-fil ou de manière filaire, **caractérisé en ce que** le procédé comporte les étapes suivantes :
- effectuer une première surveillance de présence d'un serveur DHCP principal (111), par un dit noeud (121), auquel est connecté le serveur DHCP principal (111) ;
et dans le cas où la première surveillance montre une déconnexion du serveur DHCP principal (111) :
- requérir l'activation (403), dans un dit noeud (121), d'un serveur DHCP de secours (200) ;
- effectuer une déconnexion générale (405) desdits noeuds (121, 122, 123, 124) et de tout dispositif (141, 142, 143, 144) connecté au système d'extension de couverture de communication sans-fil, la déconnexion générale étant réalisée en une seule et même étape dans laquelle un noeud maître envoie un message de requête de déconnexion générale du réseau local LAN qui inclut une information complémentaire indiquant que le serveur DHCP de secours 200 a été activé ; et
- renouveler (406) les baux d'adresses IP, par le serveur DHCP de secours (200), suite à la déconnexion générale.

2. Procédé selon la revendication 1, dans lequel, pour effectuer (405) la déconnexion générale, le procédé comporte les étapes suivantes, par chaque dit noeud (121, 122, 123, 124) :
- résilier son propre bail d'adresse IP ; et
- redémarrer toute interface de communication dudit noeud (121, 122, 123, 124) qui n'est pas utilisée pour créer le sous-réseau d'acheminement.

3. Procédé selon l'une des revendications 1 et 2, dans lequel lorsque le serveur DHCP de secours (200) est activé, le procédé comporte les étapes suivantes :
- effectuer une seconde surveillance (701) de connexion d'un nouveau dispositif (110) au système d'extension de couverture de communication sans-fil, par un mécanisme de surveillance (610) dans chaque dit noeud (121, 122, 123, 124) ;
et dans le cas où la seconde surveillance montre une connexion d'un nouveau dispositif à un dit noeud, dit noeud de branchement :
- activer (703) une barrière logique isolant le mécanisme de surveillance du noeud de branchement vis-à-vis du serveur DHCP de secours (200), pour permettre de sonder l'éventuelle présence d'un serveur DHCP dans le nouveau dispositif sans que le mécanisme de surveillance (610) du noeud de branchement ne subisse d'interférence de la part du serveur DHCP de secours (200) ;
- sonder (704) le nouveau dispositif pour déterminer si le nouveau dispositif embarque ou pas un serveur DHCP ;
- dans le cas où le nouveau dispositif n'embarque pas de serveur DHCP : désactiver (706) la barrière logique et accepter (707) le nouveau dispositif ; et
- dans le cas où le nouveau dispositif embarque un serveur DHCP, qui devient ainsi le serveur DHCP principal (111) : désactiver (708) le serveur DHCP de secours (200), désactiver (709) la barrière logique, accepter (710) le nouveau dispositif, effectuer (712) la déconnexion générale et renouveler (713) les baux d'adresses IP.

4. Procédé selon l'une des revendications 1 et 2, dans lequel le procédé comporte les étapes suivantes :
- notifier (711) lesdits noeuds (121, 122, 123, 124) que le système d'extension de couverture de communication sans-fil est en mode opérationnel normal lorsque le serveur DHCP principal (111) est actif ; et
- notifier (404) lesdits noeuds (121, 122, 123, 124) que le système d'extension de couverture de communication sans-fil est en mode opérationnel de secours lorsque le serveur DHCP de secours (200) est actif.

5. Procédé selon la revendication 4, dans lequel le procédé comporte les étapes suivantes :
- effectuer une seconde surveillance (901) de connexion d'un nouveau dispositif au système d'extension de couverture de communication sans-fil, par un mécanisme de surveillance (610) dans chaque dit noeud (121, 122, 123, 124) ;
et dans le cas où la seconde surveillance montre une connexion d'un nouveau dispositif à un dit noeud, dit noeud de branchement :
- activer (903) une barrière logique isolant le mécanisme de surveillance (610) du noeud de branchement vis-à-vis du serveur DHCP actif, que ce soit le serveur DHCP de secours (200) ou le serveur DHCP principal (111), pour permettre de sonder l'éventuelle présence d'un serveur DHCP dans le nouveau dispositif sans que le mécanisme de surveillance (610) du noeud de branchement ne subisse d'interférence de la part du serveur DHCP actif ;
- en mode opérationnel normal, activer (905) une barrière logique complémentaire isolant le sous-réseau d'acheminement vis-à-vis du nouveau dispositif, de sorte que seul le mécanisme de surveillance (610) du noeud de branchement puisse recevoir d'éventuels messages DHCP en provenance du nouveau dispositif ;
- sonder (906) le nouveau dispositif pour déterminer si le nouveau dispositif embarque ou pas un serveur DHCP ;
- dans le cas où le nouveau dispositif n'embarque pas de serveur DHCP : désactiver la (908) barrière logique et le cas échéant la barrière logique complémentaire, et accepter (909) le nouveau dispositif ;
- dans le cas où le nouveau dispositif embarque un serveur DHCP et en mode opérationnel normal, maintenir (917) le nouveau dispositif en isolement jusqu'à déconnexion dudit nouveau dispositif ; et
- dans le cas où le nouveau dispositif embarque un serveur DHCP et en mode opérationnel de secours, désactiver (911) le serveur DHCP de secours (200), désactiver (912) la barrière logique, accepter (913) le nouveau dispositif, effectuer (915) la déconnexion générale et renouveler (916) les baux d'adresses IP.

6. Procédé selon l'une quelconque des revendications 3 à 5, dans lequel sonder (906) le nouveau dispositif est effectué par envoi d'une requête de découverte DHCP et le nouveau dispositif embarque un serveur DHCP lorsqu'une réponse d'offre DHCP est reçue en réponse à la requête de découverte DHCP.

7. Procédé selon la revendication 6, dans lequel la barrière logique est réalisée par un pare-feu (600) du noeud de branchement configuré pour effectuer un droppage de toute réponse d'offre DHCP en provenance du sous-réseau d'acheminement et à destination du noeud de reconnexion.

8. Procédé selon l'une quelconque des revendications 1 à 7, dans lequel le serveur DHCP de secours (200) est activé dans le noeud (121) auquel était connecté le serveur DHCP principal (111) avant déconnexion.

9. Produit programme d'ordinateur comportant des instructions pour implémenter, par un processeur, le procédé selon l'une quelconque des revendications 1 à 8, lorsque ledit programme est exécuté par ledit processeur.

10. Support de stockage d'informations stockant un programme d'ordinateur comprenant des instructions pour implémenter, par un processeur, le procédé selon l'une quelconque des revendications 1 à 8, lorsque ledit programme est lu et exécuté par ledit processeur.

11. Système d'extension de couverture de communication sans-fil comportant un sous-réseau d'acheminement comportant un ensemble de noeuds interconnectés (121, 122, 123, 124), une pluralité de noeuds du sous-réseau d'acheminement implémentant une fonctionnalité de point d'accès d'un même réseau de communication sans-fil, le système d'extension de couverture de communication sans-fil étant adapté pour permettre de connecter des dispositifs (110, 141, 142, 143, 144) auxdits noeuds par le biais du réseau de communication sans-fil ou de manière filaire, **caractérisé en ce que** pour effectuer une gestion de baux d'adresses IP, le système d'extension de couverture de communication sans-fil comporte :
- des moyens pour effectuer (401) une surveillance de présence du serveur DHCP principal (111), par un dit noeud (121), auquel est connecté le serveur DHCP principal (111) ;
et dans le cas où la surveillance montre une déconnexion du serveur DHCP principal (111) :
- des moyens pour requérir l'activation (403), dans un noeud (121) du sous-réseau d'acheminement, d'un serveur DHCP de secours (200) ;
- des moyens pour effectuer (405) une déconnexion générale des noeuds (121, 122, 123, 124) du sous-réseau d'acheminement et de tout dispositif (141, 142, 143, 144) connecté au système d'extension de couverture de communication sans-fil, la déconnexion générale étant réalisée en une seule et même étape dans laquelle un noeud maître envoie un message de requête de déconnexion générale du réseau local LAN qui inclut une information complémentaire indiquant que le serveur DHCP de secours 200 a été activé ; et
- des moyens pour renouveler (406) les baux d'adresses IP, par le serveur DHCP de secours (200), suite à la déconnexion générale.

12. Noeud, appelé noeud maître (121), destiné à être utilisé dans un système d'extension de couverture de communication sans-fil comportant un sous-réseau d'acheminement comportant un ensemble de noeuds interconnectés (121, 122, 123, 124) dont le noeud maître (121), une pluralité de noeuds du sous-réseau d'acheminement implémentant une fonctionnalité de point d'accès d'un même réseau de communication sans-fil, le système d'extension de couverture de communication sans-fil étant adapté pour permettre de connecter des dispositifs (110, 141, 142, 143, 144) auxdits noeuds par le biais du réseau de communication sans-fil ou de manière filaire, **caractérisé en ce que** pour effectuer une gestion de baux d'adresses IP, le noeud maître (121) comporte :
- des moyens pour effectuer (401) une surveillance de présence du serveur DHCP principal (111) lorsque le serveur DHCP principal (111) est connecté au noeud maître (121) ;
et dans le cas où la surveillance par le noeud maître (121), ou une surveillance de présence du serveur DHCP principal (111) par un autre noeud (122, 123, 124) du sous-réseau d'acheminement, montre une déconnexion du serveur DHCP principal (111) :
- des moyens pour activer (403), dans le noeud maître (121), un serveur DHCP de secours (200) ;
- des moyens pour ordonner (405) une déconnexion générale des noeuds (121, 122, 123, 124) du sous-réseau d'acheminement et de tout dispositif (141, 142, 143, 144) connecté au système d'extension de couverture de communication sans-fil, la déconnexion générale étant réalisée en une seule et même étape dans laquelle un noeud maître envoie un message de requête de déconnexion générale du réseau local LAN qui inclut une information complémentaire indiquant que le serveur DHCP de secours 200 a été activé ; et
- des moyens pour renouveler (406) les baux d'adresses IP, par le serveur DHCP de secours (200), suite à la déconnexion générale.

## Patentansprüche

1. Verfahren zum Verwalten von IP-Adressen-Leasing in einem System zur Erweiterung der Abdeckung drahtloser Kommunikation mit einem Routing-Subnetz, welches wiederum einen Satz miteinander verbundener Knoten (121, 122, 123, 124) umfasst. Dabei implementieren eine Vielzahl von Knoten des Routing-Subnetzes (121, 122, 123, 124) eine Zugangspunktfunktionalität desselben drahtlosen Kommunikationsnetzes. Das System zur Erweiterung der Abdeckung drahtloser Kommunikation ist so ausgelegt, dass es die Verbindung von Geräten (110, 141, 142, 143, 144) mit den Knoten (121, 122, 123, 124) über das drahtlose Kommunikationsnetz oder auf drahtgebundene Weise ermöglicht, **dadurch gekennzeichnet, dass** das Verfahren die folgenden Schritte umfasst:
- Durchführen einer ersten Anwesenheitskontrolle eines Haupt-DHCP-Servers (111) durch einen Knoten (121), mit dem der Haupt-DHCP-Server (111) verbunden ist; und für den Fall, dass bei der ersten Kontrolle eine Trennung des Haupt-DHCP-Servers (111) vorgefunden wird:
- Anforderung der Aktivierung (403) eines Backup-DHCP-Servers (200) in einem der Knoten (121);
- Durchführen einer allgemeinen Trennung (405) der Knoten (121, 122, 123, 124) und aller Geräte (141, 142, 143, 144), die mit dem System zur Erweiterung der Abdeckung drahtloser Kommunikation verbunden sind. Dabei wird die allgemeine Trennung in einem einzigen Schritt durchgeführt, in dem ein Master-Knoten eine Nachricht zur Anforderung einer allgemeinen Trennung vom lokalen Netzwerk LAN sendet. Diese enthält zusätzliche Informationen, dass der Backup-DHCP-Server 200 aktiviert wurde; und
- Erneuern (406) der IP-Adressen-Leases durch den Backup-DHCP-Server (200), nach der allgemeinen Trennung.

2. Verfahren nach Anspruch 1, in dem das Verfahren zum Durchführen (405) der allgemeinen Trennung die folgenden Schritte durch jeden der genannten Knoten (121, 122, 123, 124) umfasst:
- Kündigen seines eigenen IP-Adressen-Leasings; und
- Neustarten jeder Kommunikationsschnittstelle des Knotens (121, 122, 123, 124), die nicht zum Erstellen des Routing-Subnetzes verwendet werden.

3. Verfahren nach einem der Ansprüche 1 oder 2, in dem, wenn der Backup-DHCP-Server (200) aktiviert ist, das Verfahren die folgenden Schritte umfasst:
- Durchführen einer zweiten Kontrolle (701) der Verbindung eines neuen Geräts (110) mit dem System zur Erweiterung der Abdeckung drahtloser Kommunikation durch einen Kontrollmechanismus (610) in jedem der Knoten (121, 122, 123, 124);
und für den Fall, dass bei der zweiten Kontrolle eine Verbindung eines neuen Geräts mit einem der Knoten, sogenannter Abzweigungsknoten, vorgefunden wird:
- Aktivieren (703) einer logischen Barriere, die den Kontrollmechanismus des Abzweigungsknotens vom Backup-DHCP-Server (200) isoliert, um die Untersuchung auf das mögliche Vorhandensein eines DHCP-Servers im neuen Gerät zu ermöglichen, ohne dass der Kontrollmechanismus (610) des Abzweigungsknotens durch den Backup-DHCP-Server (200) beeinträchtigt wird;
- Untersuchung (704) des neuen Geräts, um festzustellen, ob das neue Gerät über einen DHCP-Server verfügt oder nicht;
- für den Fall, dass das neue Gerät über keinen DHCP-Server verfügt: die logische Barriere deaktivieren (706) und das neue Gerät annehmen (707); und
- für den Fall, dass das neue Gerät über einen DHCP-Server verfügt, der dadurch zum Haupt-DHCP-Server wird (111): den Backup-DHCP-Server (200) deaktivieren (708), die logische Barriere deaktivieren (709), das neue Gerät annehmen (710), die allgemeine Trennung durchführen (712) und die IP-Adressen-Leasings erneuern (713).

4. Verfahren nach einem der Ansprüche 1 oder 2, wobei das Verfahren die folgenden Schritte umfasst:
- Benachrichtigen (711) der Knoten (121, 122, 123, 124), dass sich das System zur Erweiterung der Abdeckung drahtloser Kommunikation im normalen Betriebsmodus befindet, wenn der Haupt-DHCP-Server (111) aktiv ist; und
- Benachrichtigen (711) der Knoten (121, 122, 123, 124), dass sich das System zur Erweiterung der Abdeckung drahtloser Kommunikation im Backup-Betriebsmodus befindet, wenn der Backup-DHCP-Server (200) aktiv ist.

5. Verfahren nach Anspruch 4, in dem das Verfahren die folgenden Schritte umfasst:
- Durchführen einer zweiten Kontrolle (901) der Verbindung eines neuen Geräts mit dem System zur Erweiterung der Abdeckung drahtloser Kommunikation durch einen Kontrollmechanismus (610) in jedem der Knoten (121, 122, 123, 124);
und für den Fall, dass bei der zweiten Kontrolle eine Verbindung eines neuen Geräts mit einem der Knoten, sogenannter Abzweigungsknoten, vorgefunden wird:
- Aktivieren (903) einer logischen Barriere, die den Kontrollmechanismus (610) des Abzweigungsknotens vom aktiven Backup-DHCP-Server isoliert, unabhängig davon, ob es sich um den Backup-DHCP-Server (200) oder den Haupt-DHCP-Server (111) handelt, um die Untersuchung auf das mögliche Vorhandensein eines DHCP-Servers im neuen Gerät zu ermöglichen, ohne dass der Kontrollmechanismus (610) des Abzweigungsknotens durch den aktiven DHCP-Server beeinträchtigt wird;
- im normalen Betriebsmodus, eine zusätzliche logische Barriere aktivieren (905), die das Routing-Subnetz vom neuen Gerät isoliert, sodass nur der Kontrollmechanismus (610) des Abzweigungsknotens DHCP-Nachrichten vom neuen Gerät empfangen kann;
- Untersuchung (906) des neuen Geräts, um festzustellen, ob das neue Gerät über einen DHCP-Server verfügt oder nicht;
- für den Fall, dass das neue Gerät über einen DHCP-Server verfügt: die logische Barriere und gegebenenfalls die zusätzliche logische Barriere deaktivieren (908) und das neue Gerät annehmen (909);
- für den Fall, dass das neue Gerät über einen DHCP-Server verfügt und sich im normalen Betriebsmodus befindet, das neue Gerät isoliert halten (917), bis das neue Gerät getrennt wird; und
- für den Fall, dass das neue Gerät über einen DHCP-Server verfügt und sich im Backup-Betriebsmodus befindet, den Backup-DHCP-Server (200) deaktivieren (911), die logische Barriere deaktivieren (912), das neue Gerät annehmen (913), die allgemeine Trennung durchführen (915) und die IP-Adressen-Leasings erneuern (916).

6. Verfahren nach einem der Ansprüche 3 bis 5, in dem die Untersuchung (906) des neuen Geräts durch Senden einer DHCP-Erkennungsanfrage durchgeführt wird und das neue Gerät über einen DHCP-Server verfügt, wenn eine DHCP-Angebotsantwort als Antwort auf die DHCP-Erkundungsanfrage empfangen wird.

7. Verfahren nach Anspruch 6, in dem die logische Barriere durch eine Firewall (600) des Abzweigungsknotens bereitgestellt wird, die so konfiguriert ist, dass sie jede DHCP-Angebotsantwort vom Routing-Subnetz an den Wiederverbindungsknoten abwirft.

8. Verfahren nach einem der Ansprüche 1 bis 7, in dem der Backup-DHCP-Server (200) in dem Knoten (121) aktiviert wird, mit dem der Haupt-DHCP-Server (111) vor der Trennung verbunden war.

9. Computerprogrammprodukt, das Anweisungen enthält, um das Verfahren nach einem der Ansprüche 1 bis 8 durch einen Prozessor zu implementieren, wenn das Programm durch den Prozessor ausgeführt wird.

10. Speichermedium für Informationen, das ein Computerprogramm speichert, welches Anweisungen enthält, um durch einen Prozessor das Verfahren nach einem der Ansprüche 1 bis 8 zu implementieren, wenn das Programm durch den Prozessor gelesen und ausgeführt wird.

11. System zur Erweiterung der Abdeckung drahtloser Kommunikation, das ein Routing-Subnetz mit einem Satz von miteinander verbundenen Knoten (121, 122, 123, 124) umfasst. Dabei implementiert eine Vielzahl von Knoten des Routing-Subnetzes eine Zugangspunktfunktionalität desselben drahtlosen Kommunikationsnetzes. Das System zur Erweiterung der Abdeckung drahtloser Kommunikation ist so ausgelegt, dass es die Verbindung von Geräten (110, 141, 142, 143, 144) mit den Knoten (121, 122, 123, 124) über das drahtlose Kommunikationsnetz oder auf drahtgebundene Weise ermöglicht, **dadurch gekennzeichnet, dass** das System zur Erweiterung der Abdeckung drahtloser Kommunikation zum Verwalten von IP-Adressen-Leasing Folgendes umfasst:
- Mittel zum Durchführen (401) einer Anwesenheitskontrolle des Haupt-DHCP-Servers (111) durch einen Knoten (121), mit dem der Haupt-DHCP-Server (111) verbunden ist;
und für den Fall, dass bei der Kontrolle eine Trennung des Haupt-DHCP-Servers (111) vorgefunden wird:
- Mittel zur Anforderung der Aktivierung (403) eines Backup-DHCP-Servers (200) in einem der Knoten (121) des Routing-Subnetzes;
- Mittel zum Durchführen (405) einer allgemeinen Trennung der Knoten (121, 122, 123, 124) und aller Geräte (141, 142, 143, 144), die mit dem System zur Erweiterung der Abdeckung drahtloser Kommunikation verbunden sind. Dabei wird die allgemeine Trennung in einem einzigen Schritt durchgeführt, in dem ein Master-Knoten eine Nachricht zur Anforderung einer allgemeinen Trennung vom lokalen Netzwerk LAN sendet. Diese enthält zusätzliche Informationen, dass der Backup-DHCP-Server 200 aktiviert worden ist; und
- Mittel zum Erneuern (406) der IP-Adressen-Leases, durch den Backup-DHCP-Server (200), nach der allgemeinen Trennung.

12. Knoten, Master-Knoten (121) genannt, zur Verwendung in einem System zur Erweiterung der Abdeckung drahtloser Kommunikation mit einem Routing-Subnetz, das einen Satz miteinander verbundener Knoten (121, 122, 123, 124) einschließlich des Master-Knotens (121) umfasst. Dabei implementieren eine Vielzahl von Knoten des Routing-Subnetzes eine Zugangspunktfunktionalität desselben drahtlosen Kommunikationsnetzes Das System zur Erweiterung der Abdeckung drahtloser Kommunikation ist so ausgelegt, dass es die Verbindung von Geräten (110, 141, 142, 143, 144) mit den Knoten (121, 122, 123, 124) über das drahtlose Kommunikationsnetz oder auf drahtgebundene Weise ermöglicht, **dadurch gekennzeichnet, dass** der Master-Knoten (121) zum Verwalten von IP-Adressen-Leasing Folgendes umfasst:
- Mittel zum Durchführen (401) einer Anwesenheitskontrolle des Haupt-DHCP-Servers (111), wenn der Haupt-DHCP-Server (111) mit dem Master-Knoten (121) verbunden ist ;
und für den Fall, dass bei der Kontrolle durch den Master-Knoten (121) oder einer Anwesenheitskontrolle des Haupt-DHCP-Servers (111) durch einen anderen Knoten (122, 123, 124) des Routing-Subnetzes eine Trennung des Haupt-DHCP-Servers (111) vorgefunden wird:
- Mittel zum Aktivieren (403) eines Backup-DHCP-Servers (200) im Master-Knoten (121);
- Mittel zum Befehlen (405) einer allgemeinen Trennung der Knoten (121, 122, 123, 124) des Routing-Subnetzes und aller Geräte (141, 142, 143, 144), die mit dem System zur Erweiterung der Abdeckung drahtloser Kommunikation verbunden sind. Dabei wird die allgemeine Trennung in einem einzigen Schritt durchgeführt, in dem ein Master-Knoten eine Nachricht zur Anforderung einer allgemeinen Trennung vom lokalen Netzwerk LAN sendet. Diese enthält zusätzliche Informationen, dass der Backup-DHCP-Server 200 aktiviert worden ist; und
- Mittel zum Erneuern (406) der IP-Adressen-Leases, durch den Backup-DHCP-Server (200), nach der allgemeinen Abmeldung.

## Claims

1. Method for managing IP address leases in a wireless communication coverage extension system comprising a backhaul subnetwork comprising a set of interconnected nodes (121, 122, 123, 124), a plurality of nodes of the backhaul subnetwork (121, 122, 123, 124) implementing an access point functionality of one and the same wireless communication network, the wireless communication coverage extension system being adapted for making it possible to connect devices (110, 141, 142, 143, 144) to said nodes (121, 122, 123, 124) by means of the wireless communication network or by cable, **characterised in that** the method comprises the following steps:
- implementing a first monitoring of the presence of the main DHCP server (111), by a said node (121), to which the main DHCP server (111) is connected;
and in the case where the first monitoring shows a disconnection of the main DHCP server (111):
- requesting the activation (403), in a said node (121), of a backup DHCP server (200);
- implementing a general disconnection (405) of said nodes (121, 122, 123, 124) and of any device (141, 142, 143, 144) connected to the wireless communication coverage extension system, the general disconnection being implemented in a single step wherein a master node sends a message requesting general disconnection of the local area network LAN that includes supplementary information indicating that the backup DHCP server 200 has been activated; and
- renewing (406) the leases of IP addresses, by the backup DHCP server (200), following the general disconnection.

2. Method according to claim 1, wherein, to implement (405) the general disconnection, the method comprises the following steps, by each said node (121, 122, 123, 124):
- cancelling its own IP address lease; and
- restarting any communication interface of said node (121, 122, 123, 124) that is not used for creating the backhaul subnetwork.

3. Method according to one of claims 1 and 2, wherein, when the backup DHCP server (200) is activated, the method comprises the following steps:
- implementing a second monitoring (701) of connection of a new device (110) to the wireless communication coverage extension system, by a monitoring mechanism (610) in each said node (121, 122, 123, 124);
and, in the case where the second monitoring shows a connection of a new device to a said node, referred to as the connection node:
- activating (703) a logic barrier isolating the monitoring mechanism of the connection node with respect to the backup DHCP server (200), to make it possible to probe any presence of a DHCP server in the new device without the monitoring mechanism (610) of the connection node suffering any interference on the part of the backup DHCP server (200);
- probing (704) the new device to determine whether or not the new device includes a DHCP server;
- in the case where the new device does not include a DHCP server: deactivating (706) the logic barrier and accepting (707) the new device; and
- in the case where the new device does include a DHCP server, which thus becomes the main DHCP server (111): deactivating (708) the backup DHCP server (200), deactivating (709) the logic barrier, accepting (710) the new device, implementing (712) the general disconnection and renewing (713) the IP address leases.

4. Method according to one of claims 1 and 2, wherein the method comprises the following steps:
- notifying (711) said nodes (121, 122, 123, 124) that the wireless communication coverage extension system is in normal operational mode when the main DHCP server (111) is active; and
- notifying (404) said nodes (121, 122, 123, 124) that the wireless communication coverage extension system is in backup operational mode when the backup DHCP server (200) is active.

5. Method according to claim 4, wherein the method comprises the following steps:
- implementing a second monitoring (901) of connection of a new device to the wireless communication coverage extension system, by a monitoring mechanism (610) in each said node (121, 122, 123, 124);
and, in the case where the second monitoring shows a connection of a new device to a said node, referred to as the connection node:
- activating (903) a logic barrier isolating the monitoring mechanism (610) of the connection node with respect to the active DHCP server, whether it be the backup DHCP server (200) or the main DHCP server (111), to make it possible to probe any presence of a DHCP server in the new device without the monitoring mechanism (610) of the connection node suffering any interference on the part of the active DHCP server;
- in normal operational mode, activating (905) a supplementary logic barrier isolating the backhaul subnetwork with respect to the new device, so that only the monitoring mechanism (610) of the connection node can receive any DHCP messages coming from the new device;
- probing (906) the new device to determine whether or not the new device includes a DHCP server;
- in the case where the new device does not include a DHCP server: deactivating (908) the logic barrier and where applicable the supplementary logic barrier, and accepting (909) the new device;
- in the case where the new device includes a DHCP server in normal operational mode, keeping (917) the new device in isolation until said new device is disconnected; and
- in the case where the new device includes a DHCP server in backup operational mode, deactivating (911) the backup DHCP server, deactivating (912) the logic barrier, accepting (913) the new device, implementing (915) the general disconnection and renewing (916) the IP address leases.

6. Method according to any one of claims 3 to 5, wherein the new device is probed (906) by sending a DHCP Discover request and the new device includes a DHCP server when a DHCP Offer response is received in response to the DHCP Discover request.

7. Method according to claim 6, wherein the logic barrier is implemented by a firewall (600) of the connection node configured for dropping any DHCP Offer response coming from the backhaul subnetwork and intended for the reconnection node.

8. Method according to any one of claims 1 to 7, wherein the backup DHCP server (200) is activated in the node (121) to which the main DHCP server (111) was connected before disconnection.

9. Computer program product comprising instructions for implementing, by a processor, the method according to any one of claims 1 to 8 when said program is executed by said processor.

10. Information storage medium storing a computer program comprising instructions for implementing, by a processor, said method according to any one of claims 1 to 8, when said program is read and executed by said processor.

11. Wireless communication coverage extension system comprising a backhaul subnetwork comprising a set of interconnected nodes (121, 122, 123, 124), a plurality of nodes of the backhaul subnetwork implementing an access point functionality of one and the same wireless communication network, the wireless communication coverage extension system being adapted for making it possible to connect devices (110, 141, 142, 143, 144) to said nodes by means of the wireless communication network or by cable, **characterised in that**, to manage IP address leases, the wireless communication coverage extension system comprises:
- means for monitoring (401) the presence of the main DHCP server (111), by a said node (121), to which the main DHCP server (111) is connected;
and in the case where the monitoring shows a disconnection of the main DHCP server (111):
- means for requesting the activation (403), in a node (121) of the backhaul subnetwork, of a backup DHCP server (200);
- means for implementing (405) a general disconnection of the nodes (121, 122, 123, 124), of the backhaul subnetwork and of any device (141, 142, 143, 144) connected to the wireless communication coverage extension system, the general disconnection being implemented in a single step wherein a master node sends a message requesting general disconnection of the local area network LAN that includes supplementary information indicating that the backup DHCP server 200 has been activated; and
- means for renewing (406) the IP address leases, by the backup DHCP server (200), following the general disconnection.

12. Node, called the master node (121), intended to be used in a wireless communication coverage extension system comprising a backhaul subnetwork comprising a set of interconnected nodes (121, 122, 123, 124) including the master node (121), a plurality of nodes of the backhaul subnetwork implementing an access point functionality of one and the same wireless communication network, the wireless communication coverage extension system being adapted for making it possible to connect devices (110, 141, 142, 143, 144) to said nodes by means of the wireless communication network or by cable, **characterised in that**, to implement an IP address lease management, the master node (121) comprises:
- means for monitoring (401) the presence of the main DHCP server (111) when the main DHCP server (111) is connected to the master node (121);
and, in the case where the monitoring by the master node (121), or a monitoring of the presence of the main DHCP server (111) by another node (122, 123, 124) of the backhaul subnetwork, shows a disconnection of the main DHCP server (111):
- means for activating (403), in the master node (121), a backup DHCP server (200);
- means for ordering (405) a general disconnection of the nodes (121, 122, 123, 124) of the backhaul subnetwork and of any device (141, 142, 143, 144) connected to the wireless communication coverage extension system, the general disconnection being implemented in a single step wherein a master node sends a message requesting general disconnection of the local area network LAN that includes supplementary information indicating that the backup DHCP server 200 has been activated; and
- means for renewing (406) the IP address leases, by the backup DHCP server (200), following the general disconnection.
